# EUROPEAN PATENT APPLICATION

(11) **EP 3 021 462 A1**
(43) Date of publication of application: **18.05.2016**
(21) Application number: 13889080.1
(22) Date of filing: 12.07.2013
(51) Int. Cl.: H02K 5/22

(54) **MOTOR DEVICE**

(71) Applicant: Mitsuba Corporation, Kiryu-shi, Gunma 376-8555 (JP)
(72) Inventor: YASUMOTO, Kenji, Kiryu-shi, Gunma 376-8555 (JP); TOKIZAKI, Teppei, Kiryu-shi, Gunma 376-8555 (JP); OTA, Shigeki, Kiryu-shi, Gunma 376-8555 (JP)
(74) Representative: de Kernier, Gabriel
(86) International application number: PCT/JP2013/069116
(87) International publication number: WO 2015/004795

(57) **Abstract**

A motor case 21 is positioned to a gear case 31 in the diametrical direction by diametrically-positioning projection portions 72c of a brush holder 70 by causing the motor case 21 and the gear case 31 to face each other, and an axially-positioning projection portions 72e of the brush holder 70 are pressed from the axial direction of an armature shaft 24 by a pressing flange portion 21i, so that the brush holder 70 is positioned to the gear case 31 in the axial direction. Therefore, the size and weight of the rear wiper motor 10 can be reduced by avoiding enlargement of the coupling portion of the motor case 21 and the gear case 31, and since it is unnecessary to interpose the brush holder 70 in the coupling portion between the motor case 21 and the gear case 31, a sufficient seal performance can be obtained.

## Description

### TECHNICAL FIELD

The present invention relates to a motor apparatus provided with: a yoke in which a rotation shaft is housed; a case in which an output shaft rotated by the rotation shaft is housed, and a brush holder housed in the case.

### BACKGROUND ART

Conventionally, as a driving source for a wiper apparatus mounted on a vehicle such as for example an automotive vehicle, a motor apparatus provided with a motor section and a gear section is used. The motor section is provided with a rotation shaft rotated according to a supplied driving current, and the gear section is provided with: a speed reduction mechanism reducing the speed of rotation of the rotation shaft; and an output shaft outputting rotation of the speed reduction mechanism. By providing the gear section having the speed reduction mechanism in this manner, the motor apparatus can obtain a large output while being small-sized, so that improvement in vehicle mountability thereof is achieved. As one example of a motor apparatus provided with such a motor section and such a gear section, for example, techniques described in Patent Documents 1 and 2 are known.

A motor unit (motor apparatus) described in Patent Document 1 is provided with: a DC motor (motor section) having a motor output shaft (rotation shaft); a speed reduction mechanism composed of a worm and a worm wheel; and a wheel housing portion (gear section) having an output shaft outputting rotation of the speed reduction mechanism. In this cited document 1, such a coupling mechanism is adopted that a motor fixing portion integrally provided with a housing (the case) forming the wheel housing portion is fitted into an opening portion of a casing (the yoke) forming the DC motor and screw fixing is performed under this state.

On the other hand, a motor (motor apparatus) described in Patent Document 2 is provided with: a motor section having a rotation shaft; a speed reduction mechanism composed of a worm shaft and a worm wheel; a speed reduction section (gear section) having an output shaft outputting rotation of the speed reduction mechanism; a brush holder housed in a holder housing section integrally provided with a gear housing (case) forming the speed reduction portion. In the cited document 2, the coupling mechanism in which the brush holder is integrally provided with a base portion extending in a direction orthogonal to an axial direction of the rotation shaft, the base portion is held between a yoke housing (yoke) and the gear housing, and screwed under this state.

### RELATED ART DOCUMENTS

### PATENT DOCUMENTS

Patent document 1: Japanese Patent Application Laid-Open Publication No. 2000-282747 (FIG. 1)
Patent document 2: Japanese Patent Application Laid-Open Publication No. 2012-139078 (FIG. 1)

### SUMMARY OF THE INVENTION

### PROBLEMS TO BE SOLVED BY THE INVENTION

In the motor apparatus described in above-described Patent Document 1, however, it is necessary to provide the motor fixing portion in the case in a projecting manner to secure a space which the motor fixing portion enters in the yoke. Therefore, a coupling portion of the case and the yoke is large-sized, which may result in weight increase of the case and the yoke. In particular, since the yoke is formed into a stepped shape by performing a deep drawing work or the like to a steel plate, many steps (a plurality of times of drawing works) are required in addition to the weight increase in order to obtain forming precision. Furthermore, when the case is obtained by injection molding, casing or the like, it is difficult to form the motor fixing portion accurately, which results in deterioration of yield.

On the other hand, in the motor apparatus described in the above-described Patent Document 2, since the base portion of the brush holder is held between the yoke and the case, it is necessary to securely seal three portions of a portion between the base portion and the yoke, a portion between base portion and the case, and a portion between the yoke and the case (perform sealing) . Therefore, it is necessary to improve forming precision of the case, the brush holder or the like, which results in increase in manufacturing cost.

An object of the present invention is to provide a motor apparatus which is improved in not only size and weight reduction but also simplification of a manufacturing process.

### MEANS FOR SOLVING THE PROBLEMS

According to an aspect of the present invention, there is provided a motor apparatus provided with: a yoke in which a rotation shaft is housed; a case in which an output shaft rotated by the rotation shaft is housed; and a brush holder housed in the case, the motor apparatus comprising: a first yoke inner wall and a second yoke inner wall forming the yoke; a first case inner wall and a second case inner wall forming the case; a pressing flange portion provided to a case side part of the yoke and arranged between the first yoke inner wall and the first case inner wall; a diametrically- positioning projection portion provided to the brush holder so as to extend in an axial direction of the rotation shaft, facing the second yoke inner wall from a diametrical direction of the rotation shaft, and positioning the yoke with respect to the case in the diametrical direction; and an axially-positioning projection portion provided to the holder so as to extend in the axial direction of the rotation shaft, pressed from the axial direction of the rotation shaft by the pressing flange portion, and positioning the brush holder with respect to the case in the axial direction.

In another aspect of the present invention, the first yoke inner wall and the second yoke inner wall extend from an opening portion of the yoke over a bottom portion.

In another aspect of the present invention, four magnets are attached to the first yoke inner wall and the second yoke inner wall.

In another aspect of the present invention, a projection portion to be crushed by the pressing flange portion is formed on a pressing-flange-portion-side part of the axially-positioning projection portion.

### EFFECTS OF THE INVENTION

According to the present invention, by causing the yoke and the case to abut on each other, the yoke is positioned to the case in the diametrical direction by the diametrically-positioning projection portion of the brush holder. Furthermore, the axially- positioning projection portion of the brush holder is pressed from the axial direction of the rotation shaft by the pressing flange portion, so that the brush holder is positioned to the case in the axial direction. Therefore, a concavo-convex fitting between the yoke and the case is not performed, so that size enlargement of the coupling portion can be avoided, which can result in achievement of size reduction and weight reduction of the motor apparatus. Furthermore, since it is unnecessary to interpose the brush holder between the yoke and the case, sufficient seal performance can be obtained, which can result in achievement of simplification of a manufacturing process of the motor apparatus.

### BRIEF DESCRIPTION OF THE DRAWINGS

FIG. 1 shows a plan view of a rear wiper motor mounted on a vehicle;
FIG. 2 shows a partially sectional view taken along a line A-A in FIG. 1;
FIG. 3 shows an enlarged view of a portion enclosed by a broken line circle "B" in FIG. 1;
FIG. 4 is a perspective view showing the stopper plate;
FIG. 5 is a view of a gear case unit as viewed from a direction of an arrow C in FIG. 1;
FIG. 6 is a sectional view showing the gear case unit taken along line D-D in FIG. 1;
FIG. 7 is a plan view showing details of a switching plate;
FIG. 8 is a perspective view of the connector unit as viewed from the same side as the gear section;
FIG. 9 is a perspective view of the connector unit as viewed from the same side as the motor section;
FIG. 10 is a perspective view of the brush holder as viewed from the same side as the gear section;
FIG. 11 is a perspective view of the brush holder as viewed from the same side as the motor section;
FIG. 12 is a perspective view of a coupling procedure of the gear case and the motor case;
FIG. 13 is a schematic view of a coupling portion of the gear case and the motor case; and
FIG. 14 is a plan view showing a gear section of a rear wiper motor of the second embodiment.

### DETAILED DESCRIPTION OF PREFERRED EMBODIMENTS

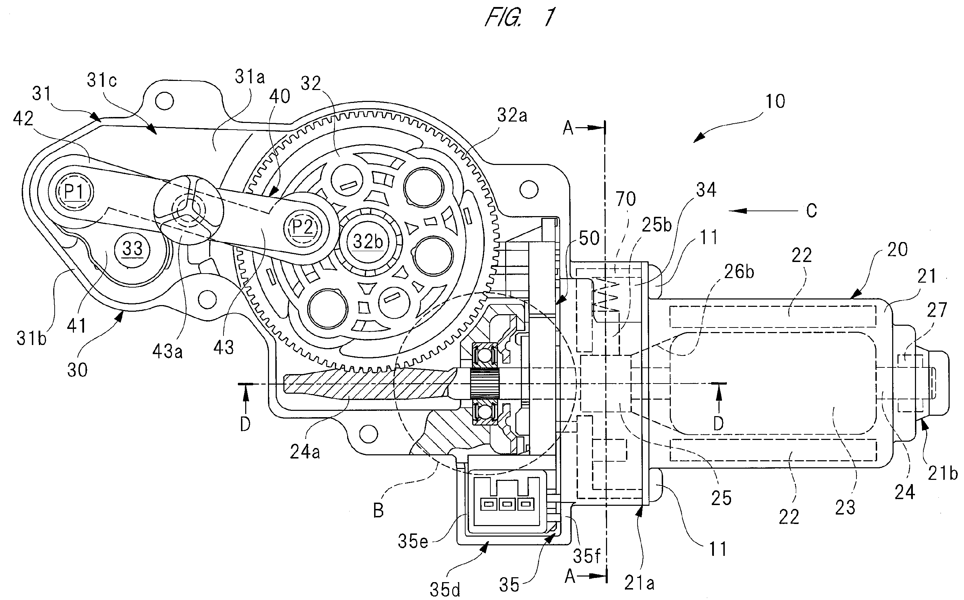

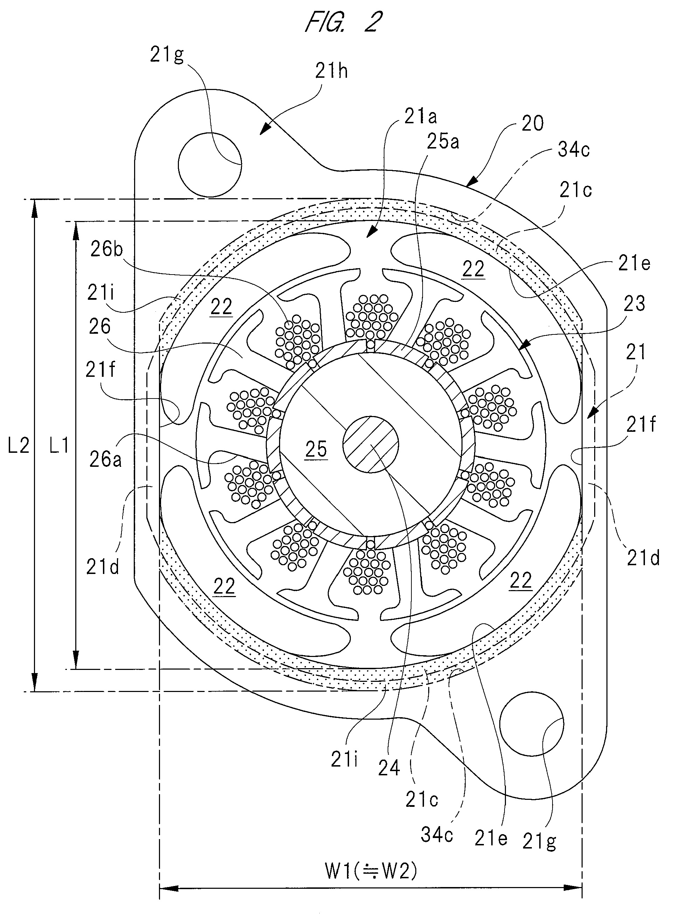

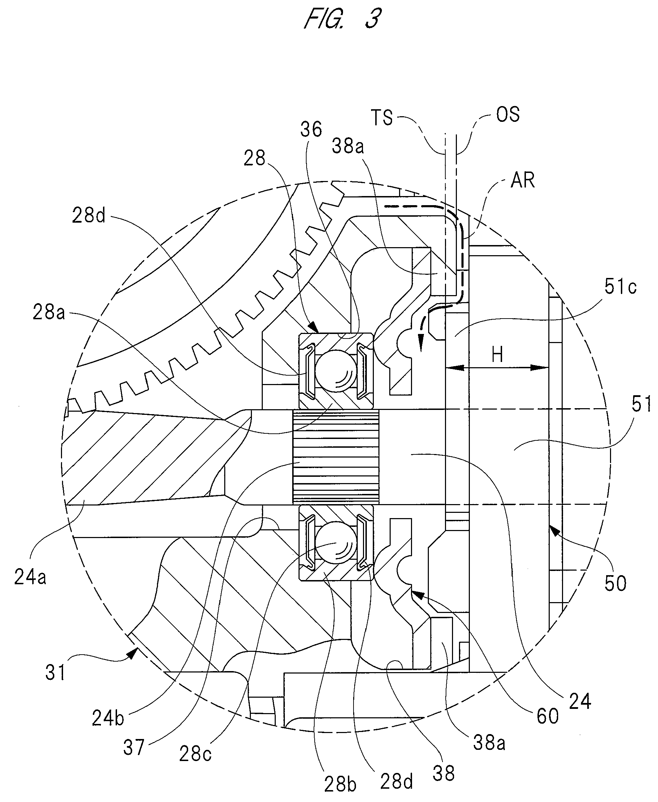

Hereinafter, a first embodiment of the present invention will be described in detail with reference to the drawings. FIG. 1 shows a plan view of a rear wiper motor mounted on a vehicle, FIG. 2 shows a partially sectional view taken along a line A-A in FIG. 1, and FIG. 3 shows an enlarged view of a portion enclosed by a broken line circle "B" in FIG. 1.

As shown in FIG. 1, a rear wiper motor 10 as a motor apparatus is used as a driving source for a rear wiper apparatus (not shown) mounted on a rear hatch door of a vehicle, and provided with a motor section 20 and a gear section 30. The motor section 20 and the gear section 30 are coupled to each other so that they are integral with each other by a pair of fastening screws 11. The rear wiper motor 10 is arranged in a narrow space of the rear hatch door or the like, and configured to perform a reciprocal swinging action (a swinging drive) of a wiper blade (not shown) provided to a rear glass (a windshield glass, not shown) in a predetermined angular range.

As shown in FIGS. 1 and 2, the motor section 20 is configured as a four-pole motor with a brush. The motor section 20 is provided with a motor case (a yoke) 21, and the motor case 21 is formed into a bottomed cylindrical shape by performing a deep drawing work (a press working) to a steel plate which is magnetic material. The motor case 21 is provided with an opening portion 21a and a bottom portion 21b, and a pair of arc-shaped portions 21c and a pair of straight portions 21d are provided between the opening portion 21a and the bottom portion 21b. The arc-shaped portions 21c and the straight portions 21d are arranged so as to face each other through an axial center (an armature shaft 24) of the motor case 21, so that a cross-sectional shape of the motor case 21 is formed into an approximately oval shape. Therefore, the motor case 21 is reduced in width, namely, thickness in a right-left direction in FIG. 2, and it is possible to make the motor apparatus thinner.

First yoke inner walls 21e and second yoke inner walls 21f are respectively provided inside the arc-shaped portions 21c and the straight portions 21d, and the first yoke inner walls 21e and the second yoke inner walls 21f form the inside of the motor case 21. The yoke inner walls 21e and 21f extend from the opening portion 21a of the motor case 21 up to the bottom portion 21b. Therefore, the motor case 21 can be made into a straight shape so as to extend from the opening portion 21a up to the bottom portion 21b without including any stepped portion, and improved in formability (ease of a press working). Furthermore, as shown in FIG. 1, since a brush holder 70 does not enter the opening portion 21a of the motor case 21, the motor case 21 is suppressed in length in an axial direction thereof. In this manner, the motor case 21 is formed into an advantageous shape in view of improvement of formability thereof, and size and width reduction thereof.

The opening portion 21a (the same side as a gear case 31) of the motor case 21 is integrally provided with a flange portion 21h formed with insertion holes 21g into which the fastening screws 11 are respectively inserted. The flange portion 21h is in surface contact with an abutting face 34g formed on a brush holder housing portion 34 of the gear case 31 with the motor case 21 abutting on the gear case 31. It should be noted that a seal member (not shown) intervenes between the flange portion 21h and the abutting face 34g, so that rain water or the like is prevented from invading the rear wiper motor 10.

Pressing flange portions 21i (half-tone dot meshing portions) formed into an approximately arc shape are formed at portions (upper and lower portions in FIG. 2) corresponding to the respective arc-shape portions 21c of the flange portion 21h. The pressing flange portions 21i are respectively provided to the motor case 21 on the same side as the gear case 31, and are formed by arranging the respective first yoke inner walls 21e nearer the armature shaft 24 than the respective first case inner walls 34c of the brush holder housing portion 34 shown by a two-dot chain line in FIG. 2. Therefore, a widthwise size of the pressing flange portion 21i in a vertical direction in FIG. 2 is set to a size of a half of a difference between a distance L2 between the respective first case inner walls 34c and a distance L1 between the respective first yoke inner walls 21e (=(L2 - L1)/2).

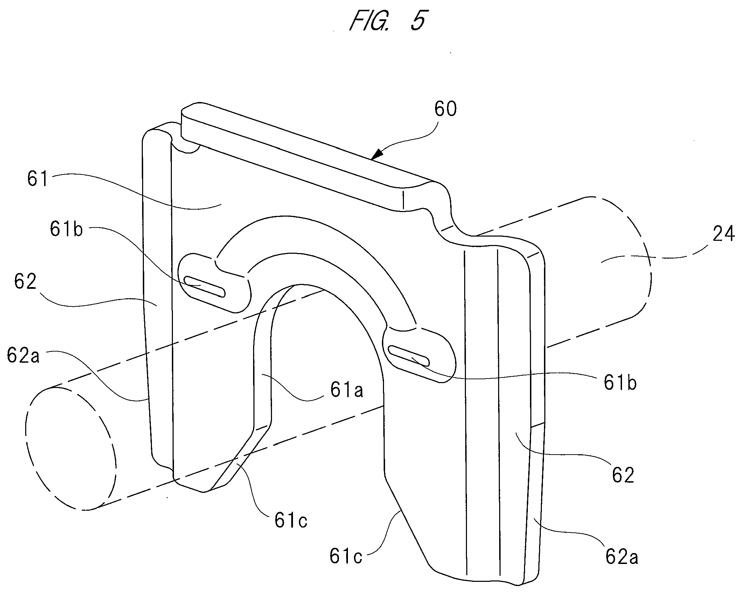

Here, the pressing flange portions 21i are arranged between the respective yoke inner walls 21e, 21f of the motor case 21 and the respective case inner walls 34c, 34d (see FIG. 5) of the brush holder housing section 34 with the motor case 21 being caused to face the gear case 31. The respective pressing flange portions 21i are configured to press axially-positioning projection portions 72e of the brush holder 70 from an axial direction of the armature shaft 24. Furthermore, a distance W1 between the respective second yoke inner walls 21f is set to be approximately equal to a distance W2 between the respective second case inner walls 34d of the brush holder housing portion 34 (see FIG. 5) (W1 W2).

A total of four magnets 22 formed into an approximately arc shape in section are attached to the inside of the motor case 21, namely, the first yoke inner walls 21e and the second yoke inner walls 21f. The respective magnets 22 are, for example, ferrite magnets, they are fixed at equal intervals (intervals of 90°) along a circumferential direction of the motor case 21, respectively, and an armature (rotor) 23 is rotatably housed inside the respective magnets 22 through a predetermined gap. A proximal end side of the armature shaft (a rotation shaft) 24 is fixed at a rotation center of the armature 23 in a penetrating fashion.

A commutator 25 is fixed on the armature shaft 24 at an approximately central portion along an axial direction of the armature shaft 24, and the commutator 25 has ten segments 25a. Furthermore, an armature core 26 forming the armature 23 is fixed to the armature shaft 24 on the proximal end side thereof, the armature core 26 is provided with ten teeth, and ten slots 26a are provided among the respective teeth. A plurality of armature coils 26b are wound in each slot 26a by a predetermined winding method so as to have a predetermined number of turns. Coil ends of the respective armature coils 26b are electrically connected to the respective segments 25a.

A plurality of feeding brushes (brushes) 25b (only one is shown in FIG. 1) come in sliding contact with the respective segments 25a of the commutator 25. The respective feeding brushes 25b are movably provided to the brush holder 70 housed in the brush holder housing section 34 of the gear case 31, and driving currents are supplied from a connector unit 50 to the respective feeding brushes 25b. Thus, the motor section 20 and the connector unit 50 are electrically connected through the respective feeding brushes 25b, the commutator 25 and the armature coils 26b, so that magnetic force is generated in the armature coils 26b, and the armature 23 (the armature shaft 24) is rotated. It should be noted that illustration of the respective feeding brushes 25b and the brush holder 70 is omitted for explanative simplification in FIG. 2.

The proximal end side of the armature shaft 24 is rotatably housed in the motor case 21 and it is supported by only a radial bearing 27 provided to the bottom portion 21b of the motor case 21. A thrust bearing supporting the armature shaft 24 from the axial direction thereof is not provided between the proximal end side of the armature shaft 24 and the bottom portion 21b. Here, the radial bearing 27 is formed of sintered material in an approximately oval shape, for example, so that the radial bearing 27 is provided with low nose and shock resistance, and self-lubricating property, and it is hard to generate abrasion powder. However, the radial bearing 27 may be formed of plastic material excellent in heat resistance or the like instead of the sintered material.

A worm gear 24a (not shown in detail) is integrally provided to the armature shaft 24 at a distal end side thereof, and the worm gear 24a is rotated in the gear case 31 according to the rotation of the armature shaft 24. The worm gear 24a is formed spirally, and it is caused to mesh with gear teeth 32a of a worm wheel 32. Here, the worm gear 24a and the worm wheel 32 constitute a speed reduction mechanism. The worm wheel 32 is rotated in a state reduced in speed from a speed of the worm gear 24a according to rotation of the worm gear 24a to output rotation having a high torque generated due to the speed reduction to the outside.

As shown in FIG. 3, a bearing fixing portion 24b formed into a concavo-convex shape (serration shape) toward in a diametrical direction of the armature shaft 24 is formed between the armature shaft 23 of the armature shaft 24 and the worm gear 24a. An inner ring member 28a of a ball bearing (bearing member) 28 is press-fitted and fixed to the bearing fixing portion 24b. However, the ball bearing 28 may be fixed to the bearing fixing portion 24b by using only a strained force generated when the inner ring member 28a is simply press-fitted to the armature shaft 24 without forming the concavo-convex shape (the serration shape) on the bearing fixing portion 24b.

The ball bearing 28 is provided with the inner ring member 28a and an outer ring member 28b, and a plurality of steel balls 28c are provided between the inner ring member 28a and the outer ring member 28b. A pair of annular cover members 28d preventing lubricating grease (not shown) applied to the steel balls 28c from leaking to the outside is provided between the inner ring member 28a and the outer ring member 28b in addition to the steel balls 28c.

The outer ring member 28b of the ball bearing 28 is held between a bearing fitting portion 36 of the gear case 31 and a stopper plate 60 attached to the gear case 31. By fixing the inner ring member 28a of the ball bearing 28 to the bearing fixing portion 24b of the armature shaft 24 and fixing the outer ring member 28b of the ball bearing 28 to the gear case 31 in this manner, the armature shaft 24 is rotatably supported and movements thereof in the axial direction and the diametrical direction relative to the gear case 31 are restricted.

Thus, the ball bearing 28 is provided with a function serving as a radial bearing and a thrust bearing. Therefore, no thrust bearing supporting the armature shaft 24 from the axial direction thereof is provided between the distal end side of the armature shaft 24 and the gear case 31.

Here, since the rear wiper motor 10 is configured as a four-pole motor reduced in size and weight, a calorific value thereof becomes larger than that of a two-pole motor large-sized and having the same output as the former, for example. However, since no thrust bearing is provided to each end side of the armature shaft 24 in the axial direction, sliding loss of the armature shaft 24, namely, frictional resistance between the thrust bearing and the armature shaft 24 is eliminated correspondingly, so that an excess calorific value is prevented from increasing.

The bearing fitting portion 36 is provided in the vicinity of a connector unit housing section 35 (see FIG. 1) in the gear case 31, and it is formed into an annular shape in the gear case 31. The bearing fitting portion 36 is opened toward the motor section 20 (the motor case 21), and the ball bearing 28 is fitted to the bearing fitting portion 36 from the same side as the motor section 20. Here, a through-hole 37 coaxial with the bearing fitting portion 36 is provided in the bearing fitting portion 36 on the opposite side to the motor section 20, and a distal end side of the armature shaft 24, namely, the worm gear 24a is inserted into the through-hole 37 at an assembling time of the motor section 20 and the gear section 30.

A stopper plate plugging portion 38 into which a stopper plate 60 is plugged is provided to the bearing fitting portion 36 of the gear case 31 on the same side as the motor section 20. The stopper plate plugging portion 38 is opened toward a gear cover (a near side in FIG. 3), and the stopper plate 60 can be plugged into the stopper plate plugging portion 38 from an opening side of the gear case 31 which is not attached with the gear cover (not shown) .

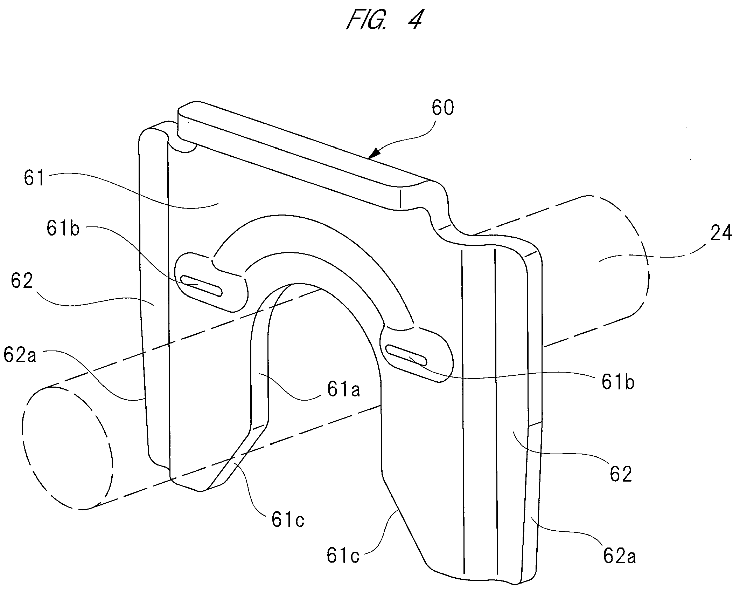

FIG. 4 is a perspective view showing the stopper plate.

As shown in FIG. 4, the stopper plate 60 is formed into an approximately "U" shape by performing a press working to a steel plate, and it is provided with a supporting main body 61 and a pair of to-be-plugged portions 62. A notched portion 61a holding a non-contacted state to the armature shaft 24 (a broken line in the figure) during attaching to the stopper plate plugging portion 38 is formed in the supporting main body 61. Furthermore, a pair of bearing supporting projection portions 61b abutting on the outer ring member 28b of the ball bearing 28 to fix the ball bearing 28 to the bearing fitting portion 36 at the attaching time of the stopper plate 60 into the stopper plate plugging portion 38 are provided in the supporting main body 61.

The to-be-plugged portions 62 are respectively provided at positions offset from a position of the supporting main body 61 along the axial direction of the armature shaft 24 by a predetermined amount. By forming the stopper plate 60 from a steel plate in an approximately stepped shape in this manner, the stopper plate 60 is provided with a spring property, thereby resiliently pressing the outer ring member 28b of the ball bearing 28 to securely prevent the ball bearing 28 from chattering in the gear case 31. Furthermore, the bearing supporting projection portions 61b are respectively arranged so as to be shifted upward in the figure from a center position of the ball bearing 28 relative to an attaching direction (a vertical direction in FIG. 4) of the stopper plate 60. As a result, the ball bearing 28 is prevented from chattering in the gear case 31 more effectively without being affected by variations of manufacturing precisions of respective constituent parts.

Guiding tapers 61c and 62a are provided to the opening side of the notched portion 61a and the distal end side (a lower side in the figure) of the to-be-plugged portion 62, respectively, and the respective guiding tapers 61c and 62a function as attaching guides of the stopper plate 60 to the stopper plate plugging portion 38. As a result, an attaching work of the stopper plate 60 to the gear case 31 is made easy to realize simplification of the manufacturing process of the rear wiper motor 10.

Here, since the stopper plate 60 supports the armature shaft 24 in the axial direction and no thrust bearing is provided to each end of the armature shaft 24 in the axial direction, positional adjustment of the armature shaft 24 in the axial direction is made unnecessary after assembling of the rear wiper motor 10. Furthermore, since a high precision is not required for clearance setting of portions of the gear case 31 and the motor case 21 facing both ends of the armature shaft 24 in the axial direction, it is possible to simplify the manufacturing process of the rear wiper motor 10 to reduce a manufacturing cost thereof largely.

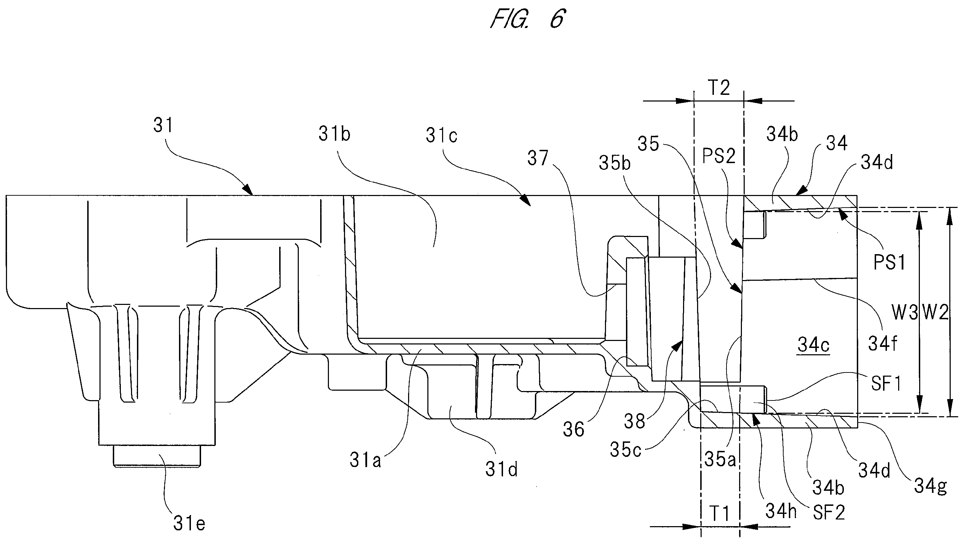

FIG. 5 is a view of a gear case unit as viewed from a direction of an arrow C in FIG. 1, and FIG. 6 is a sectional view showing the gear case unit taken along line D-D in FIG. 1.

As shown in FIGS. 1, 5 and 6, the gear section 30 is provided with the gear case (the case) 31 formed into an approximately bathtub shape by forming molten aluminum material or the like in a casting manner. The gear case 31 is provided with a bottom portion 31a and a side wall 31b, and an attaching opening portion 31c is formed on the opposite side from the bottom portion 31a. The attaching opening portion 31c is closed by a gear cover, and the worm wheel 32, the connector unit 50 and the like are housed in the gear case 31 from the attaching opening portion 31c.

A brush holder housing portion 34 is integrally provided to the motor section 20 of the gear case 31. The brush holder housing portion 34 is formed into a cylindrical shape so as to extend along the axial direction of the armature shaft 24 (see FIG. 1), and a cross-sectional shape thereof is formed into an approximately oval shape in the same manner as the cross-sectional shape of the motor case 21 (see FIG. 2).

As shown in FIG. 5, the brush holder housing portion 34 is provided with a pair of arc-shaped wall portions 34a and a pair of straight wall portions 34b. First case inner walls 34c and second case inner walls 34d are provided inside the arc-shaped wall portions 34a and the straight wall portions 34b, and the respective case inner walls 34c and 34d form inside of the brush holder housing portion 34. These first case inner walls 34c and second case inner walls 34d extend along the axial direction of the armature shaft 24.

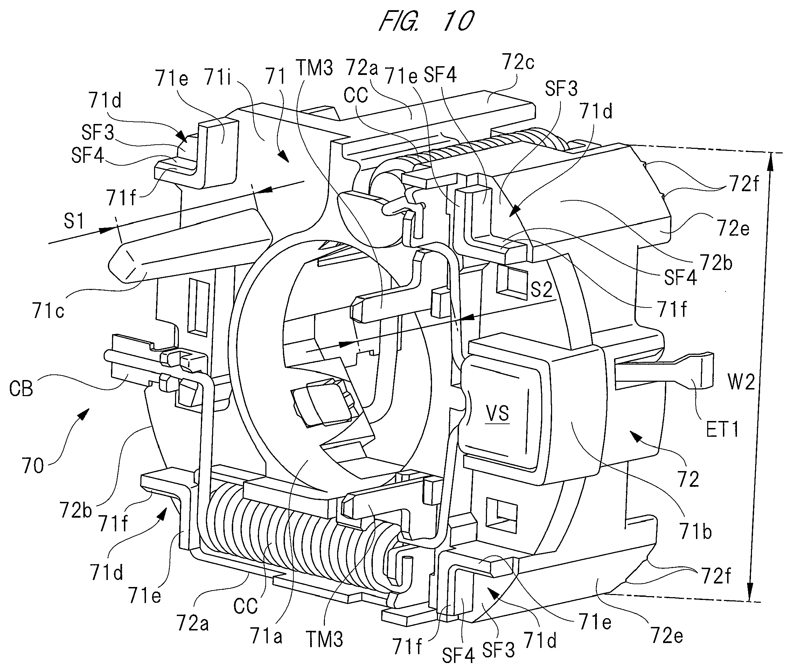

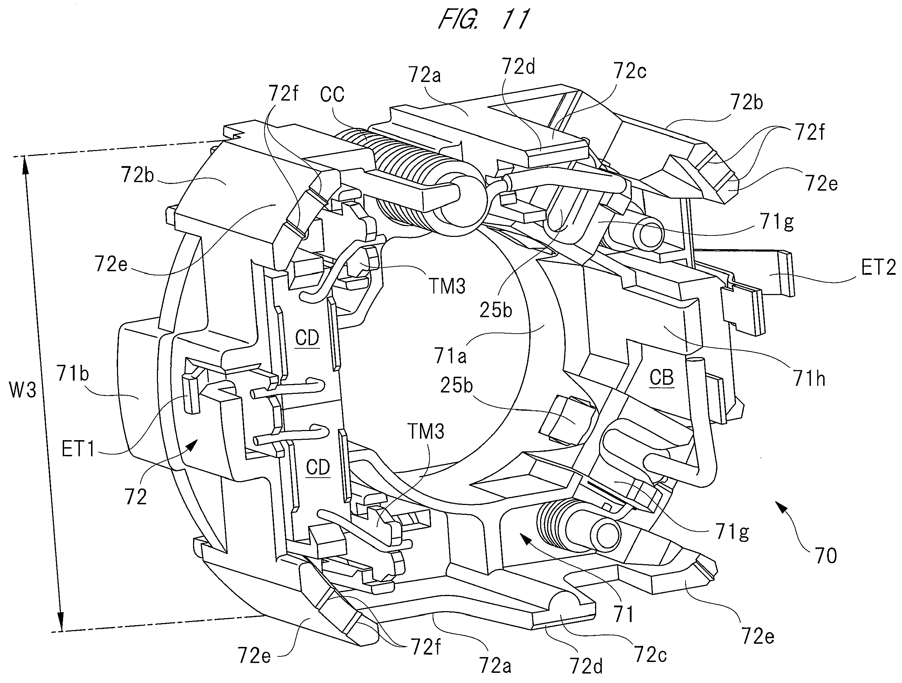

A recessed portion 34e which a housing wall portion 71b of the brush holder 70 and a holder side first ground terminal ET1 (see FIG. 10) enter is formed on one of the first case inner walls 34c (a left side in FIG. 5). A stepped portion 34f by which a holder side second ground terminal ET2 (see FIG. 11) of the brush holder 70 is positioned is formed on the other of the first case inner walls 34c (a right side in FIG. 5). Here, both the recessed portion 34e and the stepped portion 34f extend in the axial direction of the armature shaft 24 (in a housing direction of the brush holder 70).

An abutting face 34g which the flange portion 21h (see FIG. 2) of the motor case 21 is caused to abut on and which is brought in surface contact with is provided to the brush holder housing portion 34 on the same side as the motor section 20 along the axial direction thereof. A distance between the respective first case inner walls 34c on the same side as the abutting face 34g of the brush holder housing portion 34 is set to a distance L2 slightly longer than a distance L1 (see FIG. 2) between the respective first yoke inner walls 21e (L2 > L1). Furthermore, a distance between the respective second case inner walls 34d on the same side as the abutting face 34g of the brush holder housing portion 34 is set to a distance W2 approximately equal to the distance W1 (see FIG. 2) between the respective second yoke inner walls 21f. Here, a pair of female screw portions 34i screwed with the fastening screws 11 (see FIG. 1) are formed on the brush holder housing portion 34 on the same side as the abutting face 34g.

A total of four positioning projections 34h are integrally provided to the brush holder housing portion 34 on the opposite side to the motor section 20 along the axial direction thereof. The respective positioning projections 34h are arranged at connecting portions of the respective arc-shaped wall portions 34a and the respective straight wall portions 34b, namely, four corner portions inside the brush holder housing portion 34 formed into an approximately oval shape. The respective positioning projections 34h are arranged so as to face each other through an axial center of the brush holder housing portion 34. Furthermore, the respective positioning projections 34h are formed into an approximately triangular shape in sectional shape along the diametrical direction of the armature shaft 24, and they are protruded toward inside of the brush holder housing portion 34.

Each of the positioning projections 34h is provided with: a distal end faces SF1 facing in the axial direction of the armature shaft 24; and a pair of outer side faces SF2 facing in the diametrical direction of the armature shaft 24. The positioning projections 34h enter the respective positioning recessed portions 71d (see FIG. 10) to engage them, and the distal end faces SF1 abut on bottom faces SF3 of the positioning recessed portions 71d and the outer side faces SF2 abut on respective inner side faces SF4 of the positioning recessed portion 71d.

Therefore, the brush holder 70 can be positioned at a regular position without chattering in the brush holder housing portion 34. However, it is not required to provide four positioning projections 34h necessarily and at least two positioning projections may be provided so as to face each other through the axial center of the brush holder housing portion 34.

The respective first case inner walls 34c and the respective second case inner walls 34d are inclined at a fine angle to an axial line (not shown) of the armature shaft 24 extending in the right-left direction in FIG. 6. This inclination constitutes a draft angle PS1 for smoothly extracting a die (not shown) used when the gear case 31 is formed in a casting manner. Specifically, as shown in FIG. 6, a distance between the respective second case inner walls 34d is set to W3 in the respective positioning projections 34h, and it is set to W2 slightly longer than W3 in the abutting face 34g (W2 > W3).

By setting the distances between the respective second case inner walls 34d to W3 and W2 in this manner, the drafting angle PS1 of the brush holder housing portion 34 is set to "about 2.0° ". Here, distances between the respective first case inner walls 34c are also set so as to satisfy the size relationship similar to the distances between the respective second case inner walls 34d. As a result, the drafting angle PS1 of the brush holder housing portion 34 is set to "about 2.0° " over a whole circumstance of the brush holder housing portion 34.

As shown in FIG. 6, a connector unit housing section 35 in which the connector unit 50 is housed is integrally provided to the brush holder housing 34 in the gear case 31 on the opposite side to the motor section 20 adjacent to the brush holder housing portion 34. The connector unit housing section 35 is provided with a motor section side wall portion 35a positioned on the respective positioning projections 34h of the brush holder housing portion 34. Furthermore, the stopper plate plugging portion 38 is formed in the connector unit housing section 35 on the opposite side to the motor section 20 along the axial direction of the armature shaft 24, and the connector unit housing section 35 is provided with a gear portion side wall portion 35b extending from the bottom portion 31a toward the attaching opening portion 31c.

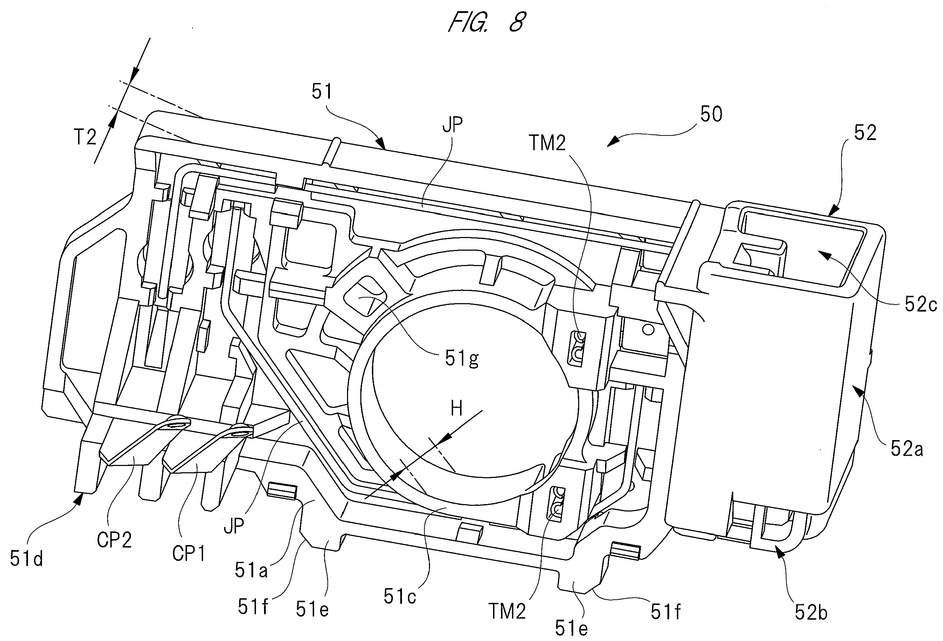

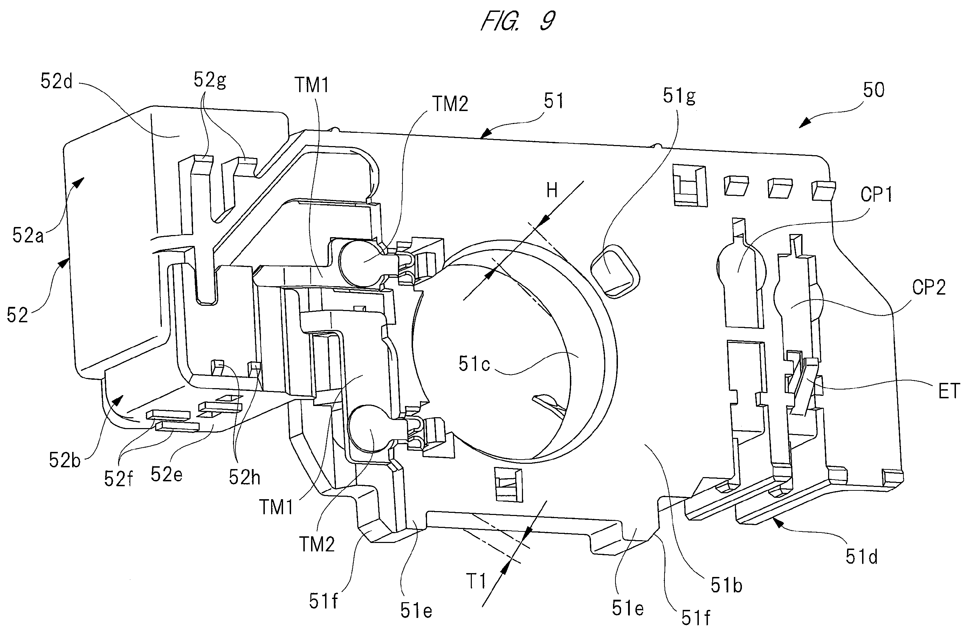

A connector main body portion 51 (see FIGS. 8 and 9) of the connector unit 50 is housed between the motor section side wall portion 35a and the gear section side wall portion 35b. The motor section side wall portion 35a and the gear section side wall portion 35b are inclined at a fine angle to a line section (not shown) extending in a direction (in a vertical direction in FIG. 6) orthogonal to the axial line of the armature shaft 24. This inclination constitutes a draft angle PS2 for extracting a die (not shown) used when the gear case 31 is formed in a casting manner. Specifically, as shown in FIG. 6, a distance between the respective side walls 35a and 35b is set to T1 on the same side as the bottom portion 31a, and it is set to T2 slightly longer than T1 on the same side as the attaching opening portion 31c (T2 > T1).

By setting the spaced distances between the respective side walls 35a and 35b to T1 and T2 in this manner, the drafting angle PS2 of the connector unit housing section 35 is set to "about 1.5° ".

A recessed portion 35c recessed in the diametrical direction of the armature shaft 24 is provided between the motor section side wall portion 35a and the gear section side wall portion 35b and between the respective positioning projections 34h. The insertion projection portions 51e (see FIGS. 8 and 9) of the connector unit 50 respectively enter the recessed portion 35c with the connector unit 50 being housed in the connector unit housing section 35. Here, when the connector unit 50 is housed in the connector unit housing section 35, the connector unit 50 is positioned at a regular position of the connector unit housing section 35 by performing alignment so as to cause the insertion projection portions 51e to engage the recessed portion 35c.

As shown in FIGS. 1 and 5, the connector unit housing section 35 is provided with a connector supporting portion 35d supporting a connector connecting portion 52 of the connector unit 50. The connector supporting portion 35d is formed into a box shape with a bottom opened at the same side as the opening side of the attaching opening portion 31c. The connector supporting portion 35d is provided with a bottom wall portion 35e and a side wall portion 35f, and the bottom wall portion 35e supports a bottom wall portion 52e of the connector connecting portion 52. On the other hand, the side wall portion 35f (the right side in FIG. 1) supports a supporting projections 52g (see FIG. 9) provided to the side wall portion 52d of the connector connecting portion 52 and the like.

As a result, when an external connector (not shown) on the vehicle side is connected to the connector connecting portion 52, breakage of the connector unit 50 is prevented by preventing a large load from being imparted on only the connector unit 50. Furthermore, since the connector supporting portion 35d made of aluminum material covers the periphery of the connector connecting portion 52, brush noise is prevented from leaking outside via the connector connecting portion 52.

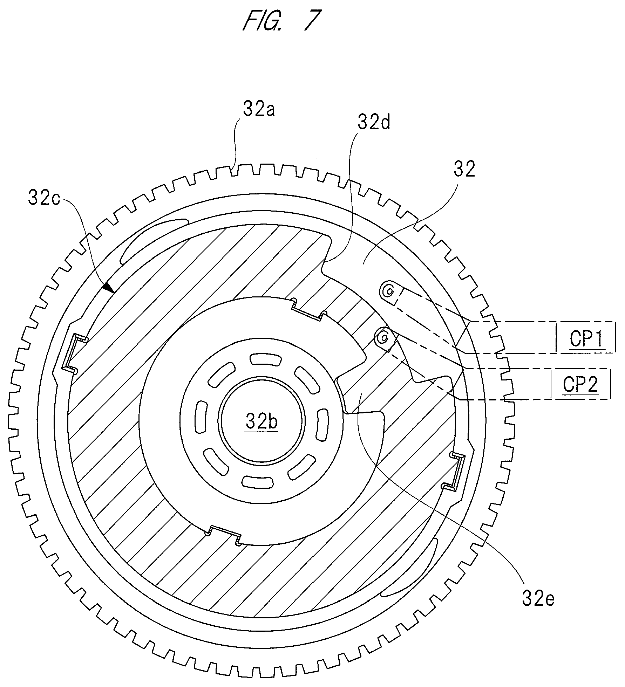

FIG. 7 is a plan view showing details of a switching plate.

As shown in FIGS. 1 and 7, the worm wheel 32 is rotatably provided in the gear case 31 and the worm wheel 32 is formed into an approximately disk shape by inj ection-molding resin material such s plastic. Gear teeth 32a are integrally provided to an outer circumferential portion of the worm wheel 32, and the worm gear 24a meshes with the gear teeth 32a. One end side of a wheel shaft 32b formed of a steel rod circular in section in an axial direction thereof is fixed at a rotation center of the worm wheel 32, while the other end side of the wheel shaft 32b in the axial direction is supported in a pivotable manner by a boss portion 31d (see FIGS. 5 and 6) provided to the bottom portion 31a of the gear case 31.

A switching plate 32c formed of a steel plate having electrical conductivity is attached to the worm wheel 32 on the same side as the bottom portion 31a, as shown by a hatched portion in FIG. 7. The switching plate 32c is formed into an approximately circular shape, and it is provided with a recessed portion 32d recessed toward inside of the switching plate 32c in a diametrical direction thereof and a projection portion 32e projecting toward the inside in the diametrical direction. Distal end sides of two contact plates CP1 and CP2 provided to the connector unit 50 come in sliding contact with the switching plate 32c according to rotation of the worm wheel 32.

By attaching the switching plate 32c having the recessed portion 32d and the projection portion 32e to the worm wheel 32 and providing the respective contact plates CP1 and CP2 so as to come in sliding contact with the switching plate 32c in this manner, a short-circuit states (conducting states) and non-conducting states of the contact plates CP1 and CP2 are sent to a vehicle-mounted controller (not shown). As a result, the vehicle-mounted controller can grasp a rotating state of the worm wheel 32, namely, a swinging position of a wiper blade to stop the wiper blade at a predetermined stop position.

As shown in FIG. 1, an output shaft 33 formed of a steel rod circular in section is housed in a portion (the left side in the figure) of the gear case 31 spaced from the worm wheel 32. The output shaft 33 is supported in a pivotable manner by a boss portion 31e (see FIGS. 5 and 6) provided to the bottom portion 31a of the gear case 31. A proximal end side of the output shaft 33 is provided in the gear case 31, while a distal end side (the depth side in FIG. 1) of the output shaft 33 is extended outside the gear case 31. The proximal end portion of the wiper blade is attached (fixed) to an extending portion (not shown) of the output shaft 33 extended outside.

A motion converting mechanism 40 converting a rotating motion of the worm wheel 32 into a swinging motion of the output shaft 33 is provided between the proximal end side of the output shaft 33 and the worm wheel 32 in the gear case 31. The motion converting mechanism 40 is provided with a swinging link 41, a coupling plate 42 and a sliding contact plate 43.

The swinging link 41 is formed into a plate shape by performing a punching work to a steel plate or the like, and one end side of the swinging link 41 in a longitudinal direction thereof is fixed to the proximal end side of the output shaft 33. On the other hand, the other end side of the swinging link 41 in the longitudinal direction is coupled to one end side of the coupling plate 42 in a pivotable manner in the longitudinal direction via a first coupling pin P1. The other end side of the coupling plate 42 in the longitudinal direction is coupled to the worm wheel 32 in a pivotable manner at a positon eccentric from the rotation center of the whole wheel 32 via a second coupling pin P2. Here, a length size of the swinging link 41 is set to a length size of about a half (about 1/2) of the length size of the coupling plate 42. Furthermore, the coupling plate 42 is also formed into a plate shape by punching a steel plate or the like in the same manner as the swinging link 41.

By providing the motion converting mechanism 40 between the output shaft 33 and the worm wheel 32 in this manner, the output shaft 33 can be swung within a predetermined angular range according to rotation of the worm wheel 32 in one direction. That is, the output shaft 33 is rotated according to rotation of the armature shaft 24. Specifically, a rotational force reduced in speed to be imparted with in a high torque is transmitted to the second coupling pin P2, and the second coupling pin P2 is rotated about the wheel shaft 32b. As a result, the other end side of the coupling plate 42 in the longitudinal direction is also rotated about the wheel shaft 32b, so that the one end of the coupling plate 42 in the longitudinal direction is swung about the output shaft 33 with the coupling plate 42 being restricted by the swinging link 41 via the first coupling pin P1.

The sliding contact plate 43 is made of resin material such as plastic excellent in self-lubricity into a plate shape, and it is attached to the coupling plate 42 on same side as the gear cover (the near side in FIG. 1). A sliding contact portion 43a coming in sliding contact with the gear cover is integrally provided to a central portion of the sliding contact plate 43 in a longitudinal direction thereof, and grease (not shown) is applied to the sliding contact portion 43a. As a result, a motion of the motion converting mechanism 40 in the gear case 31 is made smooth, and the motion converting mechanism 40 is prevented from chattering along the axial direction (the depth direction in FIG. 1) of the output shaft 33.

FIG. 8 is a perspective view of the connector unit as viewed from the same side as the gear section, and FIG. 9 is a perspective view of the connector unit as viewed from the same side as the motor section.

As shown in FIGS. 8 and 9, the connector unit 50 is formed into a predetermined shape by injection-molding resin material such as plastic, and it has the connector main body portion 51 formed into a plate shape and the connector connecting portion 52 formed into a bottomed box shape.

A sectional shape of the connector main body portion 51 in a short direction is tapered toward a housing direction (a lower side in FIGS. 8 and 9) housed in the connector unit housing section 35 (see FIG. 6) of the connector unit 50. Specifically, a plate-thickness size of the connector main body portion 51 on the housing direction distal end side (a lower side in FIGS. 8 and 9) thereof along the short-side direction thereof is set to T1 and a plate-thickness size of the connector main body portion 51 on the housing direction rear end side (an upper side in FIGS 8 and 9) thereof along the short direction is set to a plate-thickness size T2 slightly thicker than the plate-thickness size T1 on the housing direction distal end side (T2 > T1).

By adopting such plate-thickness sizes T1 and T2 and tapering the connector main body portion 51 toward the housing direction in this manner, a surface 51a and a back face 51b of the connector main body portion 51 are formed in inclined faces inclined by "about 1.5°" to the axial direction of the armature shaft 24, respectively. Therefore, when the connector main body portion 51 is housed into the connector unit housing section 35 (see FIG. 6) of the connector unit 50, while the connector main body portion 51 is being guided by the respective wall portions 35a and 35b, the surface 51a and the back face 51b abut on the gear section side wall portion 35b and the motor section side wall portion 35a through surface contacts, respectively, to come in close contact with them. That is, even in an assembling work performed by hands of a worker, the connector unit 50 can be easily housed in the connector unit housing section 35, and the connector unit 50 can be positioned accurately at a regular position of the connector unit housing section 35.

A through-cylindrical portion 51c which the armature shaft 24 (see FIG. 1) penetrates is formed at an approximately central portion of the connector main body portion 51. An inner diameter size of the through-cylindrical portion 51c is set to a size slightly larger than an outer diameter size of the ball bearing 28 (see FIG. 3). As a result, at an assembling time of the rear wiper motor 10, the armature shaft 24 provided with the ball bearing 28 can pass through the connector main body portion 51.

Furthermore, a height size H of the through-cylindrical portion 51c along the axial direction is set to a size larger than the plate-thickness sizes T1 and T2 of the connector main body portion 51 (H > T2 > T1). As a result, as shown in FIG. 3, on the same side as the surface 51a (the left side in FIG. 3), the through-cylindrical portion 51c partially enters inside of a forming wall portion 38a forming the stopper plate plugging portion 38. That is, a position of a distal end face TS of the through-cylindrical portion 51c is arranged inside the stopper plate plugging portion 38 rather than an inlet face OS of the forming wall portion 38a. By causing the through-cylindrical portion 51c to enter the inside of the forming wall portion 38a in this manner, a route between the worm wheel 32 and the commutator 25 (see FIG. 1) is bent in a labyrinth fashion a plurality of times, as shown by a broken line AR in the figure. Therefore, grease (not shown) of the worm wheel 32 becomes hard to reach the commutator 25, so that conduction failure of the rear wiper motor 10, or the like can be prevented securely.

A contact plate supporting portion 51d is integrally provided to the through-cylindrical portion 51c on the opposite side to the connector connecting portion 52, and the contact plate supporting portion 51d projects from the surface 51a of the contact main body portion 51 in the axial direction of the armature shaft 24. Two contact plates CP1 and CP2 are attached to the contact plate supporting portion 51d, and the respective contact plates CP1 and CP2 are plugged to the connector main body portion 51 from one side (a lower direction in FIGS. 8 and 9) thereof to be fixed thereto.

As shown in FIG. 9, a ground terminal ET is integrally provided to the back face 51b of the contact plate CP2. Here, the ground terminal ET is electrically connected to the motor section side wall portion 35a (see FIG. 6) of the gear case 31 with the rear wiper motor 10 being assembled.

A pair of female terminals TM2 through which driving currents from the external connector flow are provided to the through- cylindrical portion 51c on the same side as the connector connecting portion 52. Proximal end sides of respective male terminals TM1 exposed in the connector connecting portion 52 are electrically connected to distal end sides of the respective female terminals TM2 by spot welding or the like. Respective brush holder male terminals TM3 (see FIG. 10) provided to the brush holder 70 are plugged into distal end sides of the respective female terminals TM2 at an assembling time of the rear wiper motor 10, respectively.

Here, the respective brush holder male terminals TM3 are plugged into the female terminals TM2 from the back face 51b of the connector main body portion 51 to be electrically connected to the respective female terminals TM2. Furthermore, the respective brush holder side male terminals TM3 of the brush holder 70 are connected to the respective female terminals TM2 from a direction orthogonal to the connecting direction of the external connector to the connector connecting portion 52. As a result, an electrical connection between the respective brush holder side male terminals TM3 and the respective female terminals TM2 is prevented from loosening at a connecting time of the external connector to the connector connecting portion 52.

As shown in FIG. 8, a pair of jumper lines JP are provided between the respective contact plates CP1 and CP2, and the respective male terminals TM1 and the respective female terminals TM2 of the connector main body portion 51 so as to stride over the through-cylindrical portion 51c. One end sides of the respective jumper lines JP are electrically connected to the respective male terminals TM1 and the respective female terminals TM2 by spot welding or the like, and the other end sides of the respective jumper lines JP are electrically connected to the respective contact plates CP1 and CP2 by spot welding or the like.

A pair of insertion projection portions 51e inserted into the recessed portion 35c (see FIG. 6) provided in the gear case 31 are integrally provided to the connector main body portion 51 on the same side as the housing-direction distal end along the short direction of the connector main body portion 51, namely, the lower side, in FIGS. 8 and 9, of the through-cylindrical portion 51c. The respective insertion projection portions 51e are protruded toward the housing direction into the gear case 31, and they enter between the respective positioning projections 34h (see FIG. 5) provided to the gear case 31 on the same side as the bottom portion 31a without any clearance. As a result, the respective insertion projection portions 51e are engaged with the recessed portion 35c without causing chattering.

Taper portions 51f are respectively provided to the insertion projection portions 51e on the same side as the housing direction distal end and on the same side as the positioning projections 34h. The taper portions 51f guide engagement actions of the respective insertion projection portions 51e into the recessed portion 35c, and they come in sliding contact with the respective positioning projections 34h arranged on the same side as the bottom portion 31a of the gear case 31 when the connector unit 50 is housed in the connector unit housing section 35. As a result, even in an assembling work performed by hands of a worker, the connector unit 50 can be positioned accurately at a regular position of the connector unit housing section 35. However, the taper portions are not necessarily provided to only the respective insertion projection portions 51e, as described above, and they may be provided to both the respective insertion projection portion 51e and the respective positioning projections or they may be provided to only the respective positioning projections 34h.

A connector side connecting guide hole 51g is provided to the through-cylindrical portion 51c of the connector main body portion 51 on the same side as the contact plate supporting portion 51d and on the same side as the housing-direction rear end along the short direction of the connector main body portion 51 adjacent to the through-cylindrical portion 51c. The connector side connecting guide hole 51g is arranged at a position offset from the axial center of the through-cylindrical portion 51c. The connector side connecting guide hole 51g is provided so as to extend through the connector main body portion 51 in the thickness direction thereof, and a cross-sectional shape of the connector side connecting guide hole 51g is formed into an approximately square shape with corner positions chambered in an arc shape.

At an assembling time of the rear wiper motor 10, a holder side connecting guide projection 71c (see FIG. 10) of the brush holder 70 enters the connector side connecting guide hole 51g, thereby preventing an erroneous assembling of the brush holder 70 to the brush holder housing portion 34. Here, the erroneous assembling of the brush holder 70 indicates such a matter that the brush holder 70 is assembled to the brush holder housing portion 34, for example, in a state vertically inverted from a right state.

The connector connecting portion 52 is provided with a connecting portion main body 52a and a retaining cap 52b for fixing the respective male terminals TM1 to the connecting portion main body 52a. A connecting opening portion 52c connected to the external connector and a side wall portion 52d are provided in the connecting portion main body 52a. On the other hand, a bottom wall portion 52e is provided to the retaining cap 52b positioned on the opposite side to the connecting opening portion 52c. That is, the connecting opening portion 52c and the bottom wall portion 52e are arranged so as to face each other along the connecting direction (the vertical direction in FIGS. 8 and 9) of the external connector, and the bottom wall portion 52e is supported by the bottom wall portion 35e (see FIG. 1) of the connector supporting portion 35d via the respective supporting projections 52f.

Furthermore, the side wall portion 52d is supported by the side wall portion 35f (see FIG. 1) of the connector supporting portion 35d via the respective supporting projections 52g. It should be noted that a pair of supporting projections 52h abutting on the side wall portion 35f of the connector supporting portion 35d are also provided to the retaining cap 52b.

Distal end sides (not shown) of the respective male terminals M1 are exposed inside the connecting portion main body 52a, so that a plurality of female terminals (not shown) on the same side as the external connector are electrically connected to the distal end sides of the respective male terminals TM1.

By forming the connector unit 50 in this manner, at an assembling time of the rear wiper motor 10, the brush holder side male terminals TM3 (see FIG. 10) of the brush holder 70 are electrically connected to the respective female terminals TM2 from the motor section 20 (see FIG. 9) of the connector unit 50, and the distal end sides of the respective contact plates CP1 and CP2 are brought in contact with the swinging plates 32c (see FIG. 7) of the connector *unit* 50 on the same side as the gear section 30 (see FIG. 8).

FIG. 10 is a perspective view of the brush holder as viewed from the same side as the gear section, and FIG. 11 is a perspective view of the brush holder as viewed from the same side as the motor section.

As shown in FIGS. 10 and 11, the brush holder 70 is formed into a predetermined shape by injection-molding resin material such as plastic and it is provided with a base portion 71 formed into an approximately oval shape so as to be capable of attached to inside of the brush holder housing portion 34. An outer circumferential wall portion 72 extending in the axial direction of the armature shaft 24 is integrally provided to an outer circumferential portion of the base portion 71. The outer circumferential wall portion 72 is provided with a pair of flat wall portions 72a made approximately flat toward the circumferential direction of the base portion 71, and a pair of curved face wall portions 72b formed in an approximately curved face toward the circumferential direction of the base portion 71. The respective flat wall portions 72a and the respective curved face wall portions 72b are arranged so as to face each other about the base portion 71, respectively.

The outer circumferential wall portion 72 of the brush holder 70 is tapered toward the housing direction (the left side in FIGS. 10 and 11) into the brush holder housing portion 34 of the brush holder 70. Specifically, a distance between the respective flat wall portions 72a is set to W3 in the housing-direction distal end side (the left side in FIGS. 10 and 11) of the brush holder 70, while it is set to W2 slightly larger than W3 on the housing-direction rear end side (the right side in FIGS. 10 and 11) of the brush holder 70 (W2 >W3). It should be noted that a distance between the respective curved face wall portions 72b also falls in a size relationship similar to the distance between the respective flat wall portions 72a, so that the brush holder 70 is tapered toward the housing direction.

By tapering the brush holder 70 toward the housing direction in this manner, the respective flat wall portions 72a and the respective curved face wall portions 72b (the outer circumferential portion 72) constitute inclined faces inclined to the diametrical direction of the armature shaft 24 by "about 2.0°", respectively. Therefore, at the housing time of the brush holder 70 into the brush holder housing portion 34, the brush holder 70 is guided by the respective first case inner walls 34c and the respective second case inner walls 34d (see FIG. 5) and the respective curved face wall portions 72b and the respective flat wall portions 72a are brought in surface contact with the respective first case inner walls 34c and the respective second case inner walls 34d, respectively, so that the respective curved face wall portions 72b and the respective flat wall portions 72a, and the respective first case inner walls 34c and the respective second case inner walls 34d are brought in close contact with each other. That is, even in an assembling work performed by hands of a worker, the brush holder 70 can be easily housed in the brush holder housing portion 34, and the brush holder 70 can be positioned accurately at a regular position of the brush holder housing portion 34.

A through-hole 71a which the armature shaft 24 (see FIG. 1) penetrates is formed at an approximately central portion of the base portion 71. An inner diameter size of the through-hole 71a is set to a size slightly larger than an outer diameter size of the ball bearing 28 (see FIG. 3), so that the armature shaft 24 provided with the ball bearing 28 can pass through the base portion 71 during assembling of the rear wiper motor 10.

A shown in FIG. 10, a housing wall portion 71b housing a varistor VS as an electric part is integrally provided to the base portion 71 on the same side as the connector unit 50 and near one of the curved face wall portions 72b from the through-hole 71a. Here, the housing wall portion 71b is protruded outside beyond the curved face wall portion 72b, so that the housing wall portion 71b enters the recessed portion 34e (see the right side in FIG. 5) formed in one of the first case inner walls 34c, and it is engaged with the brush holder housing portion 34 at the housing time of the brush holder 70 into the brush holder housing portion 34.

A holder side connecting guide projection 71c is integrally provided to the base portion 71 on the same side as the connector unit 50, near the other of the curved face wall portions 72b from the through-hole 71a, and on an upper side in FIG. 10 from the axial center of the through-hole 71a. The holder side connecting guide projection 71c is arranged at a position offset from the axial center of the through-hole 71a. The holder side connecting guide projection 71c is tapered toward the connector unit 50, and its cross-sectional shape is further formed into an approximately square shape with corner positions chambered in an arc shape in the same manner as the connector side connecting guide hole 51g (see FIG. 9).

As a result, when the brush holder 70 is housed in the brush holder housing portion 34 in a right state, the holder side connecting guide projection 71c enters the connector side connecting guide hole 51g, and a root of the holder side connecting guide projection 71c is finally fitted into the connector side connecting guide hole 51g. Therefore, an insertion movement of the brush holder 70 into the brush holder housing portion 34 in the assembling direction is guided until the distal end of the holder side connecting guide projection 71c enters the connector side connecting guide hole 51g and the root of the holder side connecting guide projection 71c is fitted into the connector side connecting guide hole 51g. As a result, an assembling ease of the brush holder 70 into the brush holder housing portion 34 can be further improved. Here, for example, when the brush holder 70 is caused to face the brush holder housing portion 34 with the brush holder 70 being vertically inverted, namely, in an erroneous state, the holder side connecting guide projection 71c and the connector side connecting guide hole 51g do not face each other, so that the brush holder 70 cannot be housed in the brush holder housing portion 34. Thus, an erroneous assembling of the brush holder 70 is prevented.

Here, a projection amount S1 of the holder side connecting guide projection 71c from the base portion 71 is larger than a projection amount S2 of the respective brush holder side male terminals TM3 from the base portion 71 (S1 > S2). As a result, even if the brush holder 70 is erroneously assembled to the brush holder housing portion 34, the distal end portions of the respective brush holder side male terminals TM3 do not come in contact with the back face 51b of the connector unit 50, so that the respective brush holder side male terminals TM3 can be protected from being broken or the like.

A total of four positioning recessed portions 71d are integrally provided to a facing face 71i facing the gear case 31 on the same side as the connector unit 50 of the base portion 71, namely, at the distal end side along the housing direction of the brush holder 70 to the brush holder housing portion 34. The respective positioning recessed portions 71d are arranged so as to face each other through an axial center (the through-hole 71a) of the facing face 71i, and they are arranged at four corners of the base portion 71, namely, respective connecting portions of the respective flat wall portions 72a and the respective curved face wall portion 72b forming the outer circumferential wall 72. By arranging the respective positioning recessed portions 71d at the four corners of the base portion 71 in this manner, the respective positioning recessed portions 71d and the respective positioning projections 34h (see FIG. 5) of the brush holder housing portion 34 face each other toward the housing direction of the brush holder 70 when the brush holder 70 is housed in the brush holder housing portion 34. However, it is unnecessary to provide four positioning recessed portions 71d like the positioning projections 34h, and at least two positioning recessed portions may be provided so as to face each other through the axial center of the facing face 71i.

The respective positioning recessed portions 71d are each formed of a bottom face SF3 facing in the axial direction of the armature shaft 24 and a pair of inner side faces SF4 facing in the diametrical direction of the armature shaft 24. The bottom face SF3 is formed of a portion of the facing face 71i of the base portion 71, and the respective inner side faces SF4 are each formed of a projection wall 71e formed into an approximately "L" shape projecting from the facing face 71i toward the connector unit 50.

As a result, when the brush holder 70 is housed into the brush holder housing portion 34, the respective positioning projections 34h enter the respective positioning recessed portions 71d, respectively, to engage each other. When the respective positioning projections 34h engage the respective positioning recessed portions 71d, the bottom face SF3 and the respective inner side faces SF4 abut on the distal end face SF1 and the respective outer side faces SF2, respectively, so that chattering of the brush holder 70 to the gear case 31 is suppressed.

Here, as shown in FIG. 10, guide tapers 71f are provided to distal end sides of the respective projecting walls 71e forming the respective positioning recessed portions 71d. The respective guide tapers 71f guide engagement actions of the respective positioning projections 34h to the respective positioning recessed portions 71d. As a result, the brush holder 70 can be easily housed at the regular position of the brush holder housing portion 34, so that a positioning precision of the respective feeding brushes 25b to the gear case 31 is improved. As a result, while fluctuation of motor characteristics due to an advance angle fluctuation is suppressed, generation of magnetic noise can be reduced. However, the guide tapers are not necessarily provided to only the distal end sides of the respective projection walls 71e, but they may be provided to both the distal end sides of the respective projection walls 71e and the distal end sides (the same side as the distal end face SF1) of the respective positioning projections 34h, or they may be provided to only the distal end sides of the respective positioning projections 34h.

A pair of brush holder side male terminals TM3 are provided to the base portion 71 on the same side as the housing wall portion 71b adjacent to the varistor VS. The respective brush holder side male terminals TM3 penetrate the base portion 71 toward the axial direction of the armature shaft 24, and they are plugged into the base portion 71 to be fixed therein. As shown in FIG. 10, distal end sides of the respective brush holder side male terminals TM3 are arranged on the same side as the connector unit 50 of the base portion 71, while proximal end sides of the brush holder side male terminals TM3 are arranged on the same side as the motor section 20 of the base portion 71, as shown in FIG. 11.

As shown in FIG. 10, the varistor VS and one sides of a pair of choke coils CC as electrical parts are electrically connected to each other on the same side as the connector unit 50 of the respective brush holder side male terminals TM3. One choke coil CC and the other choke coil CC are provided so as to lay over the base portion 71 and one flat wall portion 72a, respectively, and the respective choke coils CC do not cross the through-hole 71a.

As shown in FIG. 11, a pair of capacitors CD as electrical parts are electrically connected to the respective brush holder side male terminals TM3 on the same side as the motor section 20, and in addition to the respective brush holder side male terminals TM3, the holder side first ground terminal ET1 is also electrically connected to the respective capacitors CD. Here, the holder side first ground terminal ET1 enters the recessed portion 34e (see the right side in FIG. 5) formed in one first case inner wall 34c to be electrically connected to the brush holder housing portion 34 at a housing time of the brush holder 70 into the brush holder housing portion 34.

As shown in FIG. 11, a pair of feeding brushes 25b and a circuit breaker CB as an electrical part are arranged on the base portion 71 on the same side as the motor portion 20 and nearer the other curved face wall portion 72b from the through-hole 71a. The respective feeding brushes 25b are movably held by a pair of brush boxes 71g integrally provided to the base portion 71, and the circuit breaker CB is held by a holding claw 71h integrally provided between the respective brush boxes 71g of the base portion 71.

As shown in FIGS. 10 and 11, the other side of the one choke coil CC is electrically connected to the one feeding brush 25b via the circuit breaker CB, and the other side of the other choke coil CC is electrically connected to the other feeding brush 25b. The circuit breaker CB is further also electrically connected to the holder side second ground terminal ET2, and in the housed state of the brush holder 70 in the brush holder housing portion 34, while the holder side second ground terminal ET2 engages the stepped portion 34f (see FIG. 5) of the brush holder housing portion 34 to be positioned, it is electrically connected to the stepped portion 34f. As a result, driving currents from the external connector are supplied from the respective brush holder side male terminals TM3 to the respective feeding brushes 25b.

As shown in FIG. 11, diametrically-positioning projection portions 72c extending in the axial direction of the armature shaft 24 are integrally provided to the respective flat wall portions 72a. The respective diametrically-positioning projection portions 72c are protruded to the side reversed to the projecting direction of the holder side connecting guide projection 71c (see FIG. 10) , namely, toward the motor section 20, and they enter inside of the motor case 21 from the opening portion 21a (see FIG. 2) of the motor case 21. As a result, the respective diametrically-positioning projection portions 72c perform positioning of the motor case 21 to the gear case 31 in the diametrical direction.

Specifically, the respective diametrically-positioning projection portions 72c face the respective second yoke inner walls 21f (see FIG. 2) inside the respective straight portions 21d from the diametrical direction of the armature shaft 24 to abut on the respective second yoke inner walls 21f. Thus, the motor case 21 is accurately positioned to the gear case 31 in the diametrical direction via the brush holder 70 fixed to the gear case 31 accurately.

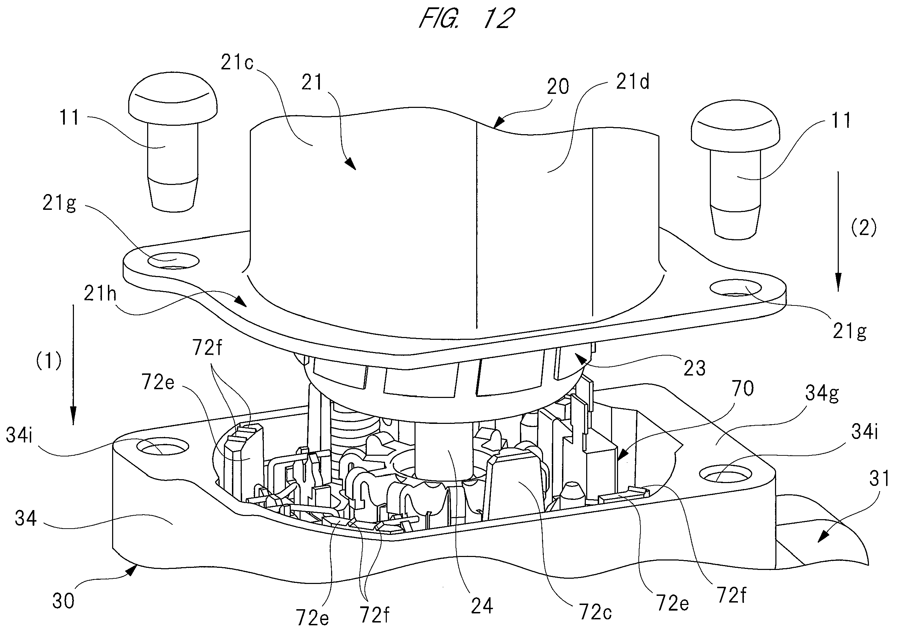

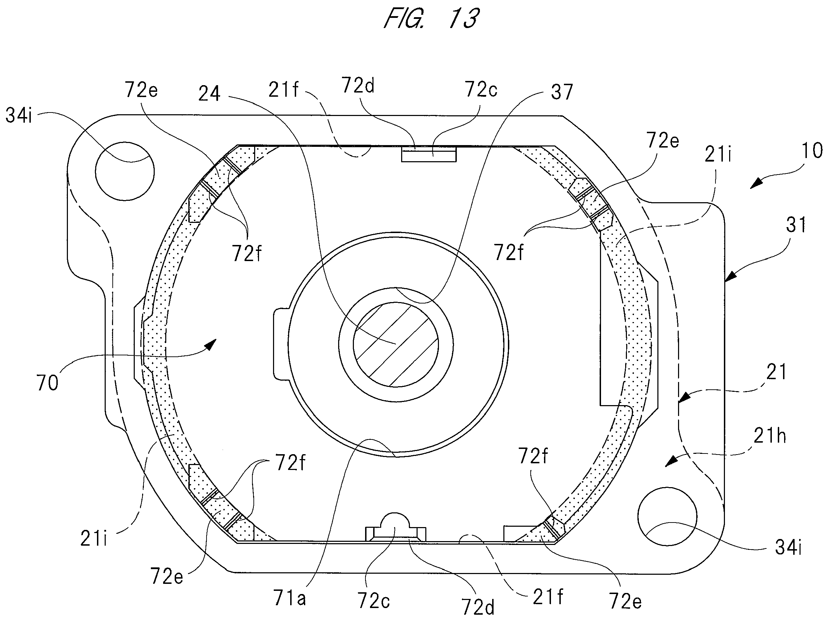

Here, the respective diametrically-positioning projection portions 72c are set to a length projecting from the brush holder housing portion 34 toward the motor case 34 by a predetermined amount (for example, 10 mm) (see FIGS. 12 and 13) . Furthermore, taper faces 72d are formed at distal end portions of the diametrically- positioning projection portions 72c, respectively, so that attaching of the motor case 21 to the gear case 31 can be performed easily.

Furthermore, as shown in FIG. 11, the axially-positioning projecting portions 72e are integrally provided to the respective curved face wall portions 72b so as to extend in an axial direction of the armature shaft 24. The respective axially-positioning projecting portions 72e are protruded on the side reversed to the side where the respective positioning recessed portions 71d are provided (see FIG. 10), namely, toward the motor section 20, and a total of four axially-positioning projection portions 72e are provided so as to correspond to the respective positioning recessed portions 71d. That is, the respective axially-positioning projecting portions 72e are also arranged at four corners of the base portion 71, namely, at respective connecting portions of the respective flat wall portions 72a and the respective curved face wall portions 72b forming the outer circumferential wall portion 72.

The respective axially-positioning projecting portions 72e are pressed from the axial direction of the armature shaft 24 by the respective pressing flange portions 21i (see a half-tone dot meshing in FIG. 2) of the motor case 21 at the assembling time of the motor case 21 to the gear case 31. As a result, the respective axially-positioning projecting portions 72e perform positioning of the brush holder 70 to the gear case 31 in the axial direction.

A plurality of fine projections (projection portions) 72f to be crushed by the respective pressing flange portions 21i at the attaching time of the motor case 21 to the gear case 31 are formed at the distal end portions of the respective axially-positioning projecting portions 72e, namely, on the same side as the respective pressing flange portions 21i of the respective axially-positioning projecting portions 72e. The respective fine projections 72f project slightly toward the respective pressing flange portions 21i and are tapered so as to be crushed easily by the respective pressing flange portions 21i.

Here, the respective axially-positioning projecting portions 72e are set to such a length that they enter inside of the brush holder housing portion 34 with the brush holder 70 being housed in the brush holder housing portion 34 (see FIGS. 12 and 13). On the other hand, the respective fine projections 72f are protruded from the brush holder housing portion 34 toward the motor case 21. As a result, by causing the flange portion 21h of the motor case 21 to abut on the abutting face 34g of the brush holder housing portion 34, the respective fine projections 72f are crushed by the respective pressing flange portions 21i. Therefore, chattering of the brush holder 70 is suppressed more securely, and the brush holder 70 is positioned at the regular position in the brush holder housing portion 34.

Next, a coupling procedure of the gear section 30 and the motor section 20 will be described in detail with reference to the drawings.

FIG. 12 is a perspective view of a coupling procedure of the gear case and the motor case, and FIG. 13 is a schematic view of a coupling portion of the gear case and the motor case. It should be noted that description of the feeding brush 25b mounted on the brush holder 70 and the like is omitted and the brush holder 70 is simplified in FIG. 13.

First, as shown in FIG. 12, the gear case 31 put with the brush holder 70 being housed in the brush holder housing portion 34 is prepared, and the motor case 21 having the armature 23 housed inside is prepared.

As shown by arrow (1) in FIG. 12, the motor section 20 is caused to face the gear section 30. At this time, a portion of the armature shaft 24 constituting the maximum diameter of the armature shaft 24 and attached with the ball bearing 28 (see FIG. 3) is prevented from coming in contact with the through-hole 71a (see FIG. 10) of the brush holder 70 and the through-cylindrical portion 51c (see FIG. 8) of the connector unit 50. Then, while the worm gear 24a (see FIG. 3) is being inserted into the gear case 31, the flange portion 21h of the motor case 21 is caused to abut on the abutting face 34g of the brush holder housing portion 34.

When the flange portion 21h is caused to abut on the abutting face 34g, first, as shown in FIG. 13, the pair of diametrically-positioning projection portions 72c come in sliding contact with the respective second yoke inner walls 21f, respectively, and the motor case 21 is accurately positioned to the gear case 31 in the diametrical direction. Then, the respective pressing flange portions 21i (the half-tone dot portion in FIG. 13) are caused to abut on the respective fine projections 72f of the respective axially-positioning projection portions 72e.

Then, as shown by arrow (2) in FIG. 12, while the respective fastening screws 11 are being inserted into the respective insertion holes 21g of the flange portion 21h, they are screw-joined to the respective female screw portions 34i of the gear case 31 with a predetermined fastening torque, respectively. As a result, the respective fine projections 72f are crushed by the respective pressing flange portions 21i, so that the brush holder 70 is housed in the brush holder housing portion 34 without chattering and coupling of the gear section 30 and the motor section 20 is completed. However, when the gear section 30 and the motor section 20 are coupled to each other, a seal member is interposed between the flange portion 21h and the abutting face 34g.

As described in detail above, according to the rear wiper motor 10 according to the first embodiment, by causing the motor case 21 and the gear case 31 to face each other, the motor case 21 is positioned to the gear case 31 in the diametrical direction by the diametrically-positioning projection portions 72c of the brush holder 70. Furthermore, the axially-positioning projection portions 72e of the brush holder 70 are pressed from the axial direction of the armature shaft 24 by the pressing flange portion 21i, so that the brush holder 70 is positioned to the gear case 31 in the axial direction.

Accordingly, it is unnecessary to perform a concavo-convex fitting between the motor case 21 and the gear case 31, enlargement of the coupling portion can be avoided, so that size reduction and weight reduction of the rear wiper motor 10 can be achieved. Furthermore, since it is unnecessary to interpose the brush holder 70 in the coupling portion between the motor case 21 and the gear case 31, a sufficient seal performance can be obtained, so that simplification of a manufacturing process of the rear wiper motor 10 can be achieved.

Next, a second embodiment of the present invention will be described in detail with reference to the drawings. It should be noted that portions having functions similar to those of the above-described first embodiment are attached with same reference signs and detailed explanations thereof are omitted.

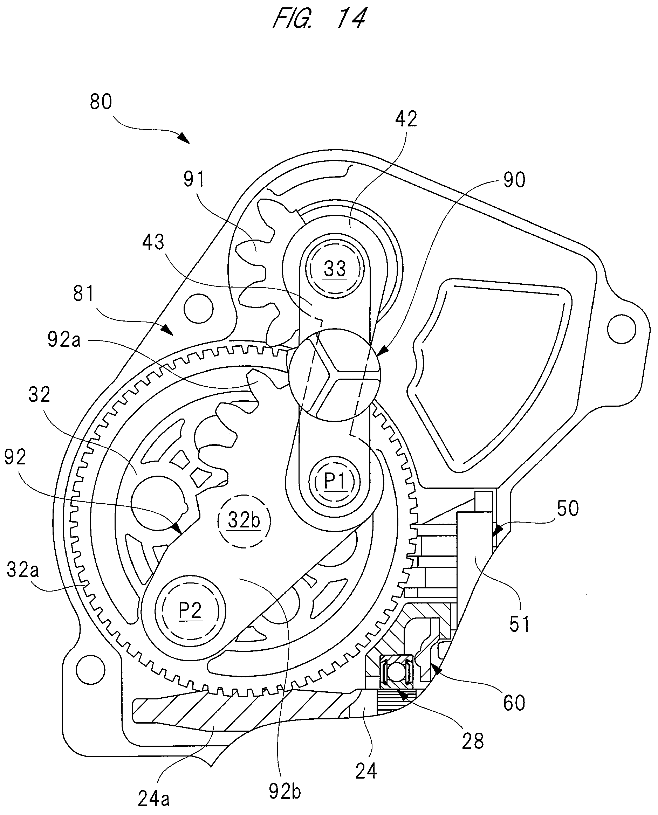

FIG. 14 is a plan view showing a gear section of a rear wiper motor of the second embodiment.

As shown in FIG. 14, a rear wiper motor (a motor apparatus) 80 according to the second embodiment is different from the rear wiper motor 10 (see FIG. 1) according to the first embodiment regarding the position of the output shaft 33 and a structure of a motion converting mechanism 90.

The output shaft 33 of the rear wiper motor 80 is arranged on the opposite side to the armature shaft 24 through the worm wheel 32 of a gear case (a case) 81. As a result, a size of the rear wiper motor 80 along the axial direction of the armature shaft 24 can be reduced as compared with the first embodiment.

The motion converting mechanism 90 of the rear wiper motor 80 is provided with a pinion gear 91, a motion converting member 92, a coupling plate 42, and a sliding contact plate 43. The pinion gear 91 is fixed to a proximal end side of the output shaft 33, and it is swung together with the output shaft 33.

The motion converting member 92 is provided with a sector gear 92a meshing with the pinion gear 91, and an arm portion 92b coupled to an eccentric position on the worm wheel 32 via a second coupling pin P2 in a pivotable manner. A first coupling pin P1 is provided to a central portion of the sector gear 92a, and the coupling plate 42 is provided between the first coupling pin P1 and the output shaft 33. Specifically, one end side of the coupling plate 42 in a longitudinal direction thereof is coupled to a proximal end side of the output shaft 33 in a pivotable manner, and the other end side of the coupling plate 42 in the longitudinal direction is coupled to the first coupling pin P1 in a pivotable manner. Thus, the coupling plate 42 according to the second embodiment keeps a distance between the output shaft 33 and the first coupling pin P1 constant, and maintains meshing of the pinion gear 91 and the sector gear 92a with each other.

In the motion converting mechanism 90 of the rear wiper motor 80, a rotation motion of the worm wheel 32 is also converted to a swinging motion of the output shaft 33. Specifically, when the second coupling pin P2 is rotated about the wheel shaft 32b according to the rotation of the worm wheel 32, the arm portion 92b of the motion converting member 92 is also rotated about the wheel shaft 32b. As a result, the sector gear 92a is swung about the first coupling pin P1, so that the pinion gear 91 meshing with the sector gear 92a, namely, the output shaft 33 is swung.

As described in detail above, a function and an effect similar to those of the above-described first embodiment can also be achieved in the rear wiper motor 80 according to the second embodiment.

The present invention is not limited to the above-described respective embodiments, and they may be variously modified without departing from the gist of the present invention, of course. For example, in the above-described embodiments, the cross-sectional shapes of the motor case 21 and the brush holder housing portion 34 are respectively formed into the approximately oval shapes, but the present invention is not limited to this example, and they may be formed into elliptical shapes, rectangular shapes or the like, for example. In short, any shape where the diametrically- positioning projection 72c can enter the motor case 21 and the pressing flange portion is formed on the same side as the motor case 21 can be adopted.

Furthermore, in the above-described embodiments, the positioning recessed portion 71d is provided in the brush holder 70 and the positioning projection 34h is provided to the gear case 31, but the present invention is not limited to this example, and the concavo-convex relationship may be inverted. That is, a configuration that the positioning projection is provided to the brush holder 70, while the positioning recess is provided in the gear case 31 can be adopted.

Furthermore, in the above-described embodiments, the respective insertion projection portions 51e are provided to the connector unit 50, while the recessed portions 35c are provided in the gear case 31, but the present invention is not limited to this example, and the concavo-convex relationship may be inverted. That is, a configuration where the recessed portion is provided in the connector unit 50, while the insertion projection portion is provided to the gear case 31 may be adopted.

In addition, in the above-described embodiments, the connector main body portion 51 and the connector connecting portion 52 of the connector unit 50 integrally provided such that the connecting direction of the brush holder 70 and the connecting direction of the external connector are orthogonal (90°) to each other, but the present invention is not limited to this example, and these connecting directions may be intersected at 60° or the like so as to corresponding to a shape (narrower or wider) of a mounting space where the rear wiper motor 10 is mounted, or the like.

Furthermore, in the above-described embodiments, the speed- reduction mechanism (the worm speed-reducer) composed of the worm gear 24a and the worm wheel 32 is adopted, but the present invention is not limited to this example, and a planetary gear speed-reducer can be adopted as the speed reduction mechanism, for example. In this case, for example, such an arrangement can be adopted that a sun gear is used as a gear of the input side (the same side as the armature shaft 24) and a ring gear is used as a gear of the output side (the same side as the output shaft 33).

Furthermore, in the above-described embodiments, the ferrite magnets are adopted as the respective magnets 22, but the present invention is not limited to this example, and plate-shaped magnets composed of a neodymium magnet or the like can be adopted. The number of magnets, the number of segments, the number of slots or the like can be freely set in accordance with the specification required for the motor section.

Furthermore, in the above-described embodiments, the fine projection 72f is provided to the distal end portion of the axially-positioning projection portion 72e, but the present invention is not limited to this example, and the fine projection 72f may be eliminated. In this case, it is desirable that the distal end portions of the axially-positioning projection portions 72e are respectively protruded from the brush holder housing portion 34 by a fine amount with the brush holder 70 being housed in the brush holder housing portion 34.

Furthermore, in the above-described embodiments, the fine projection 72f is tapered, but the present invention is not limited to this example, and the fine projection 72f may be formed into a thin plate shape extending toward the motor case 21, or the like. In short, as long as the fine projection 72f has such a rigidity that it is crushed by the pressing flange portion 21i of the motor case 21, a shape thereof is not limited.

Furthermore, in the above-described embodiments, the motor apparatus is the rear wiper motor 10, but the present invention is not limited to this example, and it can be also applied to a motor apparatus used as a driving source for a power window apparatus, an electric sunroof apparatus, a power seat apparatus and the like.

### INDUSTRIAL APPLICABILITY

The motor apparatus is used to drive a wiper member forming a wiper apparatus mounted on such a vehicle as an automobile to wipe a windshield.

## Claims

1. A motor apparatus provided with: a yoke in which a rotation shaft is housed; a case in which an output shaft rotated by the rotation shaft is housed; and a brush holder housed in the case, the motor apparatus comprising:
a first yoke inner wall and a second yoke inner wall forming the yoke;
a first case inner wall and a second case inner wall forming the case;
a pressing flange portion provided to a case side part of the yoke and arranged between the first yoke inner wall and the first case inner wall;
a diametrically-positioning projection portion provided to the brush holder so as to extend in an axial direction of the rotation shaft, facing the second yoke inner wall from a diametrical direction of the rotation shaft, and positioning the yoke with respect to the case in the diametrical direction; and
an axially-positioning projection portion provided to the holder so as to extend in the axial direction of the rotation shaft, pressed from the axial direction of the rotation shaft by the pressing flange portion, and positioning the brush holder with respect to the case in the axial direction.

2. The motor apparatus according to claim 1, wherein the first yoke inner wall and the second yoke inner wall extend from an opening portion of the yoke over a bottom portion.

3. The motor apparatus according to claim 1, wherein four magnets are attached to the first yoke inner wall and the second yoke inner wall.

4. The motor apparatus according to claim 1, wherein a projection portion to be crushed by the pressing flange portion is formed on a pressing-flange-portion-side part of the axially-positioning projection portion.

## Amended claims

### Amended claims under Art. 19.1 PCT

**1.** (Amended) A motor apparatus provided with: a yoke in which a rotation shaft is housed; a case in which an output shaft rotated by the rotation shaft is housed; and a brush holder housed in the case, the motor apparatus comprising:
a flange portion provided to the yoke, and arranged so as to abut on the case;
a first yoke inner wall and a second yoke inner wall forming the yoke;
a first case inner wall and a second case inner wall forming the case;
a pressing flange portion provided to a facing part of the flange portion so as to face the case, and arranged between the first yoke inner wall and the first case inner wall with the yoke abutting on the case;
a diametrically-positioning projection portion provided to the brush holder so as to extend in an axial direction of the rotation shaft, facing the second yoke inner wall from a diametrical direction of the rotation shaft, and positioning the yoke with respect to the case in the diametrical direction; and
an axially-positioning projection portion provided to the brush holder so as to extend in the axial direction of the rotation shaft and pressed from the axial direction of the rotation shaft by the pressing flange portion, and positioning the brush holder with respect to the case in the axial direction,
wherein the brush holder has a housing direction distal end part tapered toward the case.

**2.** The motor apparatus according to claim 1, wherein the first yoke inner wall and the second yoke inner wall extend from an opening portion of the yoke over a bottom portion.

**3.** The motor apparatus according to claim 1, wherein four magnets are attached to the first yoke inner wall and the second yoke inner wall.

**4.** The motor apparatus according to claim 1, wherein a projection portion to be crushed by the pressing flange portion is formed on a pressing-flange-portion-side part of the axially-positioning projection portion.
